Europäisches Patentamt

European Patent Office

Office européen des brevets

(19)

(11) Veröffentlichungsnummer : **0 115 586**
**B1**

(12) # EUROPÄISCHE PATENTSCHRIFT

(45) Veröffentlichungstag der Patentschrift :
12.02.86

(21) Anmeldenummer : 83112004.3

(22) Anmeldetag : 30.11.83

(51) Int. Cl.⁴ : **C 01 F 11/18, B 02 C 23/06,
C 09 C 3/04**

(54) Verfahren zum Nassvermahlen von natürlichen und/oder synthetischen Carbonaten.

(30) Priorität : 14.12.82 DE 3246232

(43) Veröffentlichungstag der Anmeldung :
15.08.84 Patentblatt 84/33

(45) Bekanntmachung des Hinweises auf die Patenterteilung : 12.02.86 Patentblatt 86/07

(84) Benannte Vertragsstaaten :
**AT BE CH DE FR GB IT LI SE**

(56) Entgegenhaltungen :
EP-A- 0 016 344
EP-A- 0 027 996
DE-A- 3 014 620
GB-A- 1 309 074

(73) Patentinhaber : **Bleeck, Jörg**
**14935 S.W. Hawk Ridge Road**
**Tigard Oregon 97223 (US)**

**Kröck, Hans-Joachim, Dr.**
**Ziegelhüttenweg 21**
**D-8452 Hirschau (DE)**

(72) Erfinder : **Bleeck, Jörg**
**14935 S.W. Hawk Ridge Road**
**Tigard Oregon 97223 (US)**
Erfinder : **Kröck, Hans-Joachim, Dr.**
**Ziegelhüttenweg 21**
**D-8452 Hirschau (DE)**

(74) Vertreter : **LOUIS, PÖHLAU, LOHRENTZ & SEGETH**
**Kesslerplatz 1 P.B. 3055**
**D-8500 Nürnberg (DE)**

EP 0 115 586 B1

## Beschreibung

Die Erfindung betrifft ein Verfahren zum Naßvermahlen von natürlichen und/oder synthetischen Carbonaten, wie z. B. Calciumcarbonat, in einer wäßrigen Suspension.

Es ist bekannt, natürliche und synthetische Carbonate, insbesondere Calciumcarbonate, in Kugel- und Rührwerkskugelmühlen naß aufzumahlen. Dabei soll der Feststoffgehalt in der wäßrigen Carbonat-Suspension möglichst hoch gehalten werden, um eine gute Mahlwirkung zu erreichen. Weiterhin wünscht der Verbraucher für viele Anwendungsbereiche einen hohen Feststoffgehalt. Ein zunehmender Feststoffgehalt bedeutet jedoch, daß die Viskosität des Mahlgutes ansteigt, somit für das Mahlen ein höherer Energieaufwand erforderlich ist. Bisher wird nun versucht, durch Zugabe von Entflockungsmitteln, beispielsweise aus Polyacrylat-, Polyphosphat- oder Polycarbonsäurebasis die Viskosität zu erniedrigen, wobei gleichzeitig verhindert werden soll, daß nach erfolgter mechanischer Zerkleinerung, d. h. Zermahlung, vorliegende Feinstanteile des Feststoffes sich ihrer Neigung folgend wieder zu groben Aggregaten vereinigen. Gibt man Entflockungsmittel stufenweise zu, so fällt die Viskosität zuerst linear ab. Nach Erreichen eines Minimums steigt sie jedoch bei weiterer Zugabe von Entflockungsmitteln wieder stark an. Es ist daher nicht möglich, durch erhöhte Zugabe der bekannten Entflockungsmittel die Viskosität des Mahlgutes soweit zu senken, daß man eine optimale Kornverteilung mit begrenzten Anteilen an übermahlenen, d. h. sehr klein gemahlenen Feinanteilen bei hohem Feststoffgehalt erzielen kann. Ein weiterer Nachteil der Verwendung der bekannten Entflockungsmittel ist darin zu sehen, daß die Bakterienanfälligkeit des Mahlgutes erhöht und beispielsweise bei der Papierherstellung unter Verwendung von Calciumcarbonat die Retention und die Abwasserqualität verschlechtert werden.

Der Erfindung liegt nun die Aufgabe zugrunde, ein Verfahren zum Naßvermahlen von Carbonaten vorzuschlagen, bei welchem mit einer begrenzten Zugabe von Entflockungsmitteln gearbeitet werden kann, trotzdem jedoch sich eine so niedrige Viskosität erreichen läßt, daß bei hohen Feststoffgehalten eine optimale Kornverteilung mit einem Minimum an übermahlenen erzielt werden kann. Das Verfahren nach der Erfindung soll insbesondere die Möglichkeit bieten, vorgegebene Kornverteilungen im Feinkornbereich unter 10 μm herzustellen.

Zur Lösung dieser Aufgabe wird nach der Erfindung bei dem gattungsgemäßen Verfahren vorgeschlagen, daß die Carbonat-Suspension zum Vermahlen mit Zeolithen versetzt wird.

Der Zusatz von Zeolithen gestattet einerseits, bei hohem Feststoffgehalt den Anteil an übermahlenen Feinanteilen zu minimieren, was z. B. zur Folge hat, daß der Bindemittelbedarf bei Streichcarbonaten gesenkt werden kann. Ein weiterer Vorteil der Verwendung von Zeolithen als Zusatz bei der Naßvermahlung von Carbonaten, insbesondere Calciumcarbonaten, ist darin zu sehen, daß weniger Entflockungsmittel eingesetzt werden müssen, so daß sich später, z. B. bei der Verwendung des Mahlgutes zur Papierherstellung, die Retention nicht verschlechtert und die Abwasserbelastung vermindert wird. Weiterhin ist davon auszugehen, daß bei einer Lagerung der Carbonat-Suspension weniger Biocide erforderlich sind, um Bakterien zu bekämpfen. Der starke Einsatz von Entflockungsmitteln begünstigt die Bakterienbildung, weil die bekannten Entflockungsmittel gute Nährböden für Bakterien sind.

Die Wirkung des Zeolith-Zusatzes bei dem Verfahren nach der Erfindung beruht vermutlich darauf, daß die bei der Naßvermahlung neu gebildeten freien positiven Ionen, beispielsweise Calcium-Ionen durch Zeolithe als Ionen-Austauscher gebunden werden. Zeolithe, die Na-Ionen enthalten, sind in der Lage, diese in einer Ca-Ionen enthaltenden wässrigen Lösung bei Berührung gegen die Ca-Ionen auszutauschen. Dabei tritt für jeweils zwei Na-Ionen ein Ca-Ion in das Gitter ein. Bei Ersatz der einwertigen Kationen durch mehrwertige wird im übrigen auch der Querschnitt der Porenöffnungen beeinflußt und somit die Molekularsiebwirkung der Zeolithe verändert. Es verschiebt sich um übrigen auch die katalytische Aktivität der Zeolithe.

Selbstverständlich ist es bei einem Vorgehen gemäß der Erfindung möglich, neben Zeolith die Carbonat-Suspension zusätzlich mit einem Entflockungsmittel zu versetzen, was unter Umständen zu einem weiter verbesserten Endprodukt führt.

Es hat sich gezeigt, daß sich das Verfahren nach der Erfindung besonders günstig durchführen läßt, wenn eine Carbonat-Suspension verwendet wird, die einen Carbonat-Feststoffgehalt von mindestens 30 Gew.%, vorzugsweise wenigstens 72 Gew.% aufweist. Man erhält dann eine sehr gute Ausbeute mit hohem Feststoffgehalt, ohne daß ein zu großer Anteil übermahlener Feinbestandteile vorhanden wäre.

Zur Erzielung einer hinreichend niedrigen Viskosität genügt es gemäß der Erfindung, wenn ein Zeolith-Anteil von 0,05 bis 3 Gew.%, vorzugweise von etwa 1 Gew.%, bezogen auf den Carbonat-Feststoffgehalt zugesetzt wird.

Bei einem Vorgehen nach der Erfindung läßt sich beispielsweise beim Naßvermahlen einer wäßrigen Calciumcarbonat-Suspension erreichen, daß das in der Suspension nach erfolgter Naßvermahlung enthaltene Calciumcarbonat einen Anteil von mindestens 20 Gew.% einer Korngröße von weniger als 2 μm hat, ohne übermahlen zu sein, d. h. ohne einen allzu großen Anteil an Bestandteilen mit einem Korndurchmesser von weniger als 0,2 μm.

Nachstehend wird anhand zweier Beispiele das erfindungsgemäße Verfahren näher erläutert. Beispiel 1 betrifft die konventionelle Naßvermahlung von Calciumcarbonat, Beispiel 2 die Vermahlung unter Zusatz von Zeolith gem. der Erfindung.

Beispiel 1

430 g Calciumcarbonat mit einem Anteil von 99,99 Gew.% einer Korngröße von weniger als 42 μm und 32 Gew.% mit einer Korngröße von weniger als 2 μm werden mit 250 ml Wasser unter Zugabe von 0,05 Gew.% absolut trockenen (atro) Entflockungsmitteln aufgeschlämmt und anschließend dreißig Minuten in einer Labor-Rührwerkskugelmühle gemahlen.

Hierauf wird die Viskosität der Suspension auf einem Brookfield-Rotationsviskosimeter gemessen. Bei 100 Umdrehungen pro Minute ergibt sich dabei eine Viskosität von 590 cP (0,59 Pa · s).

Beispiel 2

430 g Calciumcarbonat mit einem Anteil von 99,99 Gew.% einer Korngröße von weniger als 42 μm und 32 Gew.% mit einer Korngröße von weniger als 2 μm werden mit 250 ml Wasser unter Zugabe von 0,05 Gew.% absolut trockenen (atro) Entflockungsmittel und 4,3 g eines synthetischen oder natürlichen Zeoliths (z. B. vom Typ Clinoptilolit) aufgeschlämmt und anschließend 30 Minuten in einer Labor-Rückwerkskugelmühle gemahlen.

Hierauf wird die Viskosität der Suspension auf einem Brookfield-Rotationsviskosimeter gemessen. Bei 100 Umdrehungen pro Minute ergibt sich dabei eine Viskosität von 320 cP (0,32 Pa · s).

Der Vergleich der vorstehenden Beispiele zeigt also, daß bei übrigen übereinstimmenden Versuchsbedingungen durch den Zusatz von Zeolith die Viskosität der Suspension ganz erheblich (von 590 auf 320 cP) gesenkt werden kann.

## Patentansprüche

1. Verfahren zum Naßvermahlen von natürlichen und/oder synthetischen Carbonaten, wie z. B. Calciumcarbonat, in einer wäßrigen Suspension, dadurch gekennzeichnet, daß die Carbonat-Suspension zum Vermahlen mit Zeolithen versetzt wird.

2. Verfahren nach Anspruch 1, dadurch gekennzeichnet, daß die Carbonat-Suspension zusätzlich mit einem Entflockungsmittel versetzt wird.

3. Verfahren nach Anspruch 1 oder 2, dadurch gekennzeichnet, daß eine Carbonat-Suspension verwendet wird, die einen Carbonat-Feststoffgehalt von mindestens 30 Gew.% aufweist.

4. Verfahren nach Anspruch 3, dadurch gekennzeichnet, daß der Carbonat-Feststoffgehalt wenigstens 72 Gew.% beträgt.

5. Verfahren nach einem der vorhergehenden Ansprüche, dadurch gekennzeichnet, daß ein Zeolith-Anteil von 0,05-3 Gew.% bezogen auf den Carbonat-Feststoffgehalt zugesetzt wird.

6. Verfahren nach Anspruch 5, dadurch gekennzeichnet, daß ein Zeolith-Anteil von etwa 1 Gew.% bezogen auf den Carbonat-Feststoffgehalt zugesetzt wird.

## Claims

1. Process of wet grinding natural and/or synthetic carbonates, such as calcium carbonate in a wet suspension, characterized by the addition of a zeolite to the carbonate suspension.

2. Process according to claim 1, characterized by further adding a deflocculation agent to the carbonate suspension.

3. Process according to claims 1 or 2, characterized by using a carbonate suspension, which contains carbonate solids of at least 30 % by weight.

4. Process according to claim 3, characterized in that the carbonate solids contents is at least 72 % by weight.

5. Process according to any of the preceding claims characterized by an addition of zeolites to 0.05-3 % of the dry weight of the carbonate solids contents.

6. Process according to claim 5, characterized by an addition of zeolite to approximately 1 % of the dry weight of the carbonate solids contents.

## Revendications

1. Procédé pour broyer par voie humide des Carbonates naturels et/ou synthétiques comme par exemple du Carbonate de Calcium dans une suspension aqueuse caractérisée par le fait que des Zéolites sont ajoutées à la suspension du Carbonate pour broyer.

2. Procédé selon la revendication 1, caractérisé par le fait que l'on ajoute additionnellement un produit défloculateur.

3. Procédé selon une des revendications 1 ou 2, caractérisé par le fait que l'on utilise une suspension du Carbonate avec une teneur en matières solides d'au moins 30 % de poids.

4. Procédé selon la revendication 3, caractérisé, par le fait que la teneur en matières solides du Carbonate se porte au moins à 72 % de poids.

5. Procédé selon une ou plusieurs des revendications précédentes, caractérisé par le fait qu'une portion du Zéolite de 0,05-0,3 % de poids référée à la teneur en matières solides de Carbonate est ajoutée.

6. Procédé selon la revendication 5, caractérisé par le fait qu'une portion de Zéolite d'environ 1 % de poids référée à la teneur en matières solides de Carbonate est ajoutée.